# EUROPEAN PATENT APPLICATION

(11) **EP 4 717 913 A1**
(43) Date of publication of application: **01.04.2026**
(21) Application number: 24213796.6
(22) Date of filing: 19.11.2024
(51) Int. Cl.: F03G 4/00, F02G 1/04

(54) **GEOTHERMAL ENGINE AND METHOD OF ENERGY EXTRACTION FROM ROCK MASS WITH GEOTHERMAL ENGINE**

(30) Priority: 26.09.2024 PL 44989624
(71) Applicant: Akademia Gorniczo-Hutnicza im. Stanislawa Staszica w Krakowie, 30-059 Krakow (PL)
(72) Inventor: Janowski, Miros aw, 30-237 Kraków (PL)
(74) Representative: Rogozinska, Alicja

(57) **Abstract**

Geothermal engine with one element for absorbing heat from an upper heat source and one element for discharging heat to a lower heat source, the geothermal engine being suitable to be placed within a borehole (17) and having a cooling medium circuit, a cylindrical housing (9) with a cylinder head (10), a working piston (1), a displacer (2) with a regenerator (3), a crankshaft, and connecting rods for the piston and displacer, a rock mass - cylinder head heat exchanger as well as a generator-starting device. The working piston discharges heat to lower heat source, while the rock mass - cylinder head heat exchanger (11) absorbs heat from the upper heat source. The cooling medium circuit comprises a pump, a casing pipe (13), and a central pipe (15). Inside the casing pipe (13), there is a flow space (14) for the heated cooling medium, while inside the central pipe (15), there is a flow space (16) for the cooled cooling medium, which constitutes the lower heat source and circulates over the upper surface of the working piston (1). The crankshaft (4) is enclosed within the engine's working chamber, where a working gas is present between the piston (1) and the displacer (2). The pump includes at least one suction valve (7) and at least one discharge valve (8).

Method for obtaining energy from the rock mass using such a geothermal engine mounted in a borehole in which the movement of a working piston (1) is initiated and the flow and change in volume of a working gas located inside of the engine is forced providing mechanical energy needed to start the engine with the use of an external generator-starting device (19), powered from the surface and working in starting mode, then the generator-starting device (19) is switched to generating mode, then the compressed working gas is heated with heat obtained from the borehole and transfers said heat to cool cooling medium, converting the mechanical energy of the working piston movement with use of the generator-starting device (19) that is set to generating mode in the electrical energy, that is extracted with wires (20) on the surface and pumping heated cooling medium with use of at least one discharge valve (8) through the cooling medium circuit to the surface.

## Description

### Field of the Invention

The invention concerns a geothermal engine that includes at least one heat-extracting element from an upper heat source and at least one heat-discharging element to a lower heat source. It is designed to be placed within a borehole and features a cooling medium circulation system. The engine consists of a cylindrical housing with a cylinder head, where a movable working piston and displacer with a regenerator are positioned along the housing axis. It also includes a crankshaft, connecting rods for the working piston and displacer, a rock mass - cylinder head heat exchanger, and a generator-starting device for converting electrical energy into mechanical energy for engine startup and converting mechanical energy into electricity once the engine is running. The cooling medium circuit integrates a pump, a casing pipe along the borehole wall, and a centrally located pre-insulated central pipe. The space between the casing pipe and the central pipe carries the heated cooling medium, while the inner part of the central pipe transports the cold cooling medium, which circulates over the working upper surface of the piston. The invention also includes a method for extracting energy from geothermal sources using said engine, particularly for converting geothermal energy from existing or new boreholes into mechanical or electrical energy, with potential applications in heating and hot water supply.

### Background Art

The use of Stirling engines for extracting and converting geothermal energy is well-known. According to some known solutions, devices and systems for energy extraction are inserted directly into boreholes. Documents are available that disclose the use of mechanical energy, for example, for drilling rock formations using geothermal energy obtained through a Stirling engine, or that describe cryogenic engines for geothermal energy extraction.

The document US2010223924A1 discloses a device comprising a first heat exchanger flow-connected to the proximal segment of a borehole and a second heat exchanger flow-connected to the distal segment of the borehole. The device further includes a circulation barrier that provides sealing between the device and the borehole to isolate the proximal and distal segments of the borehole from each other. A thermal engine, connected to the first and second heat exchangers, is a closed-cycle thermodynamic gas-phase engine utilizing thermal energy. The first heat exchanger, second heat exchanger, circulation barrier, and thermal engine are designed to be placed together within the borehole.

Document US2013220656A1 discloses a free-piston Stirling engine with a power piston and a displacer piston, which are positioned along a common axis within a cylindrical pressure vessel. The heat engine operates as a thermoacoustic engine with, preferably, a cylindrical resonance pressure tube. Thermal energy to start the heat engine is supplied by an electric resistance heater. The required electrical power for the resistance heater is provided by a surface-based or underground electric generator, driven by drilling fluid. Thermal energy is supplied to the engine by hot fluid, which is delivered through a heat exchanger located at the upper end of the engine's working space, or by a burner flame or frictional heat. The disclosed solution consumes a significant amount of energy, mainly because the heat required to create a temperature differential in the engine must be supplied to the device at the surface. Furthermore, the thermoacoustic engine depends on the resonant frequency of the working gas.

Application US2024044232A1 discloses a system and method for actively extracting thermal energy, hydrocarbons, and other energy resources from a reservoir. In one example, a large number of fluid conduits are introduced into the borehole. Combustion fluid is injected through one of the conduits into the reservoir, where it ignites and sustains a combustion zone by burning fuel within the reservoir. To recover thermal energy, a cool fluid is circulated through the borehole via another conduit, where it is heated by the thermal energy in the combustion zone. Thermal energy can be recovered from the heated fluid, or further processes can be carried out to recover various types of energy. The flow and composition of the combustion fluid, as well as the flow rate of the cool fluid, can be individually controlled to regulate heat transfer, balance thermal energy recovery with enhanced oil recovery (EOR), and control temperature and pressure for safety..

Patent description US 8,281,591 discloses a self-sustaining geothermal generator, comprising a boiler, turbine chamber, electric generator, condenser, and electric cable. The condenser consists of a distributor chamber, a peripheral chamber, and multiple tubes placed between these chambers. The peripheral chamber of the condenser surrounds and cools the turbine, electric generator, and condenser chamber selector. The condenser cools and converts steam back into a liquid state, then returns it to the boiler for reheating. The document discloses the use of a geothermal generator where water in the boiler is converted into high-pressure, high-temperature steam by heat from hot rocks located in a previously drilled borehole below the earth's surface. The steam is used to produce electricity, which is transported to the earth's surface via an electric cable. In "binary" geothermal power plants, a large number of such generators can be used through a system of multiple heat exchangers. This is a concept of a borehole turbine engine installed within the borehole, which is relatively complex, costly, and challenging to control. However, the presented concept has the drawback of lacking a circulation pump, which prevents the system from operating, as there is no device separating the low- and high-pressure sections of the circuit.

### Technical Problem

The invention concerns a task of eliminating inconveniences of state of the art and allowing to extract and use rock mass geothermal energy, specifically from the existing boreholes to receive mechanical or electric energy directly in borehole with use of geothermal engine.

The goal of the invention is also to minimize use of external mechanical and electrical energy to tasks such as start-up, and cooling medium flow forcing through the engine cooling circuit, as well as effective use of the mechanical energy generated by the engine, which in turn allows energy saving and decreases conversion losses between the engine and for example external circulation pump of the engine cooling medium.

Concurrently, the invention is intended to also ensure a geothermal engine of a simple construction, that ensures failure-free operation and allows to mounting and exploitation of engine at the bottom of a rock mass in condition specific to borehole, which engine simultaneously demonstrations high efficiency, effectiveness and performance.

In addition, the engine built is characterized with improved heat exchange at the upper heat source and lower heat source and by that improved performance of said engine in relation to it its volume and mass

### Summary of the Invention

Geothermal engine comprising at least one heat receiving element that absorbs heat from an upper heat source and at least one heat discharging element that discharges heat to the lower heat source, suitable to be placed in a borehole and having a cooling medium circuit, wherein the geothermal engine has a cylindrical engine body with a cylinder head, in which a working piston, a displacer equipped with a regenerator are placed movably within the engine body along its axis, additionally, a crankshaft, a working piston connecting rod, and a displacer connecting rod, a rock mass - cylinder head heat exchange, as well as a generator-starting device used for converting an electrical energy into a mechanical energy for starting the engine and for converting a mechanical energy produced by the engine into an electrical energy, wherein the cooling medium circuit comprises a pomp that is integrated with the engine, a casing pipe located along walls of the borehole and a pre-insolated central pipe placed axially in a central part of the borehole, wherein inside the casing pipe between the central pipe and the casing pipe there is a heated cooling medium flow space, while inside a central pipe the is a cold cooling medium flow space, wherein the cool cooling medium constitutes the lower heat source and flows around a top surface of the working piston, characterized in that said at least one heat discharging element that discharges heat to the lower heat source is the working piston, and said at least one heat absorbing element that absorbs heat from the upper heat source is the rock mass - cylinder head heat exchanger the rock mass - cylinder head heat exchange is mounted with its bottom part in a socket at the bottom of the of the borehole, while its upper part is in contact with the engine body, particularly with the cylinder head of the engine, the generator-starting device and crankshaft are placed inside the working space of the engine inside which space there is working gas, between the working piston and the displacer, the regenerator is constructed as channels distributed in the displacer having a filler that absorbs and discharges heat, and the pomp comprises the working piston and located at the top part of the engine body at least one suction valve and at least one discharge valve.

Advantageously, the generator-starting device is device that has a linear construction mounted on the working piston or has a rotary construction mounted on the crankshaft.

Advantageously, said at least one suction valve is axially mounted in the borehole and/or said at least one discharge valve is mounted at the circumference of the borehole.

Advantageously, the working gas is either one out of helium, hydrogen or carbon dioxide and/or the cooling medium is water.

Advantageously, the geothermal engine is connected with a LNG regasification station, and the cooling medium is a Liquid Natural Gas (LNG).

Method of extracting energy form a rock mass using a geothermal engine according to the invention mounted in a borehole characterized in that the movement of a working piston is initiated and the flow and change in volume of a working gas located inside of the engine is forced providing mechanical energy needed to start the engine with the use of an external generator-starting device, powered from the surface and working in starting mode then the generator-starting device is switched to generating mode, then the compressed working gas is heated with heat obtained from the borehole through a borehole-head heat exchanger and an engine body head, moving the working piston upward the engine until reaching an upper return position at which the working gas volume in the internal space of the engine has maximum volume, then absorbs heat from the expanded working gas with the working piston and transfers said heat to cold cooling medium, decreasing said gas volume and forcing a downward movement of the working piston to reach lower return position, at which the working gas volume within internal engine space reaches minimum value, then each step of the method is sequentially repeated, converting the mechanical energy of the working piston movement with use of the generating-starting device that is set to generating mode in the electrical energy, that is extracted with wires on the surface, and pumping heated cooling medium with use of at least one discharge valve through the cooling medium circuit.

Advantageously, the working gas used is helium, hydrogen or carbon dioxide, and/or water is used as the cooling medium, which after receiving heat is transported to the surface and used as, in example, a heating and warm water source.

Advantageously, a Liquid Natura Gas is used as the cooling medium which is sucked in with said at least one suction valve and said at least one discharge valve, receiving heat from the working piston, is submitted to a regasification process and then in a gas state pumped through the space out of the borehole to the surface.

The present invention allows to generate mechanical or electrical energy directly in the borehole with omitting need to use of transporting the cooling medium to the engine located on the surface.

Engine according to the invention has simple construction wherein the movable parts are reduced to a minimum, which allows it to be placed in borehole and ensures low failure rate while the construction costs are minimized in comparison to other more complex and currently used solutions. Concurrently the engine according to the invention demonstrations high efficiency, effectiveness and performance estimated to be ½ of the theoretical Carnot circuit performance for a given conditions.

The design of the geothermal engine, due to the arrangement of its components, is simple and compact, resulting in reliable operation and allowing for the engine to be installed within the rock mass, ensuring resistance to the conditions present there. The extraction of usable energy from the engine is achieved in the form of electrical and thermal energy from the cooling circuit.

The location of the crankshaft inside of the engine improves its sealing and also contributes to the simplicity and compactness of the engine's design, allowing the engine to be easily placed in the borehole. Such an engine is characterized by reliable operation even under the conditions present at the bottom of the rock mass. Placement of the crankshaft inside of the engine eliminates the need to seal the displacer rod, and eliminates need for the displacer rod itself and the working piston rod from the engine design. Additionally, the shaft operates in the working gas environment, which is less aggressive than cooling water, as is the case with an external shaft. This reduces the risk of corrosion and increases the lifespan of the engine.

The displacement action of the working piston increases the turbulence of the cooling medium on the pump side of the working piston, which improves heat transfer and thereby enhances the efficiency and performance of the engine.

The heat regenerator located in the displacer is composed of multiple channels, which are arranged to distribute the working medium uniformly in a turbulent flow over the head surface, i.e., the heating surface, and the surface of the working piston, i.e., the cooling surface, improving heat exchange at the cylinder head and on the working piston, positively impacting its efficiency.

The design of the geothermal engine and the arrangement of its components result in a somewhat flattened structure, meaning it has a high ratio of piston and displacer diameter to their stroke and thickness, which significantly increases the heat exchange surface area relative to the volume of the chamber containing the heated medium as well as the chamber with the cooled medium. This, in turn, improves heat transfer and thereby increases the efficiency and performance of the engine.

The cooling medium pressure, resulting from the height of the water column in the borehole at its bottom, helps improve the sealing of the working piston, allowing for the use of high-pressure working gas (medium) in the engine, which increases the engine's efficiency relative to its volume and weight.

The cylindrical shape of the engine allows for easy installation in the borehole by lowering it directly into the borehole along with the heat exchanger and the inner column.

The cooling medium pump according to the invention has a direct drive, as the movement of the working piston changes the volume of the pump's working space, which activates the discharge and suction valves, initiating the flow of cooling medium. This eliminates the need for an external power supply, enabling more effective use of the mechanical energy generated by the engine, reducing energy conversion losses between the engine and an external circulation pump, and saving energy by removing the need for an additional drive for the lower heat source circuit.

Compared to a thermoacoustic engine, this engine is not limited by the resonant frequency of the working gas and can operate over a wider range of speeds (cycle frequencies).

The engine according to the invention, due to its design, allows for energy generation directly at the heat source in the borehole, whether drilled specifically for geothermal energy extraction or remaining from mining or extraction activities. The borehole may be dry, water-bearing, or even saturated with hydrocarbons, increasing the potential to utilize renewable energy sources, reducing environmental pollution from fossil fuel combustion, and enabling the use of unused boreholes. The engine according to the invention also provides energy independence. An additional benefit is that the engine according to the invention enables power supply to users located far from the power grid. Additionally, the engine allows for heat energy recovery by extracting heat from the rock mass, transferring it to the cooling medium, and subsequently using it for surface-level central heating systems or domestic hot water

### Reference to Drawings

The invention in the embodiments was illustrated in the drawing on which:

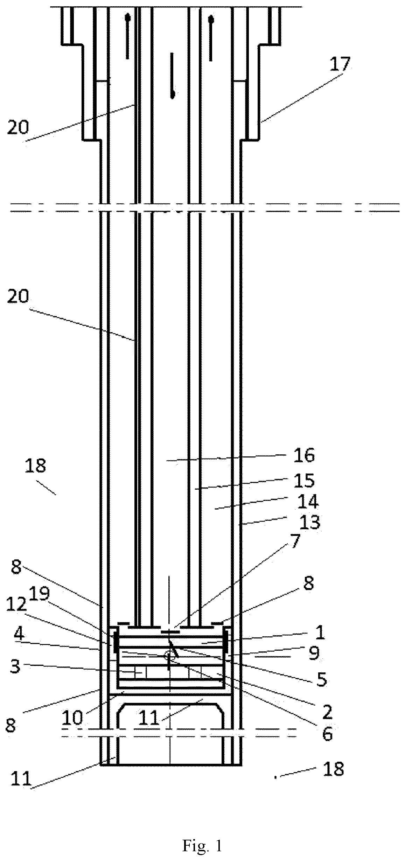

Fig. 1 shows a geothermal engine placed in the borehole, in a schematic cross-section perpendicular to the axis of the shaft.
Fig. 2a shows the geothermal engine in an enlarged cross-section along the shaft, with a linear generator-starting device.
Fig. 2b shows the geothermal engine in an enlarged cross-section along the shaft, with a rotary generator-starting device.
Fig. 3a shows an enlarged fragment of Fig. 1, illustrating phase I of the engine operation, where the displacer is in the upper return position, and the working piston moves upward.
Fig. 3b shows an enlarged fragment of Fig. 1, illustrating phase II of the engine operation, where the working piston is in the upper return position, and the displacer pumps gas through the regenerator into the cooled space between the working piston and the displacer.
Fig. 3c shows an enlarged fragment of Fig. 1, illustrating phase III of the engine operation, where the working piston moves downward, and the displacer is in the lower return position.
Fig. 3d shows an enlarged fragment of Fig. 1, illustrating phase IV of the engine operation, where the working piston, from its lower return position, will move upward, and the displacer moves upward, pumping the working gas through the regenerator from the cooled space to the heated space between the cylinder head and the displacer

### Detailed Description of Embodiments

The geothermal engine shown in the figures and described in the example embodiments is a Stirling engine, equipped with at least one element that absorbs heat from the upper heat source and at least one element that transfers heat to the lower heat source. The geothermal engine according to the invention is designed to be placed in a borehole 17.

The geothermal engine has a cylindrical body 9 with a cylinder head 10, inside which the working piston 1 and the displacer 2 with the regenerator 3 are movably placed along the axis of the housing. Additionally, the engine has the crankshaft 4, the connecting rod 5 of the working piston 1, the connecting rod 6 of the displacer 2, and the heat exchanger 11 between the rock mass and the head, which is mounted in the borehole 17 and touches the engine body 9, particularly the cylinder head 10, ensuring optimal heat transfer. The working piston 1 serves as a heat exchanger, transferring heat to the lower heat source, while the rock mass and the cylinder head heat exchanger 11 absorbs heat from the upper heat source. The working piston 1, acting as a cooler, is the only moving part outside the engine. The lower part of the rock mass and cylinder head heat exchanger 11 is adapted to absorb heat from the rock mass 18, while its upper part is adapted to transfer heat to the cylinder head 10.

The cylinder head 10 has a circular cross-section, with a diameter approximately equal to the diameter of the displacer 2 and the working piston 1. The thermal insulation 12 of the engine separates the engine's cooled space from the heat flow from the rock mass 18, and also constitutes part of the cylindrical body 9 in the area of the lower return position of the displacer 2 and the upper return position of the working piston 1. The thermal insulation 12 is made from a high-strength insulating material, such as ebonite or another material with better mechanical properties, wear resistance, and lower thermal conductivity.

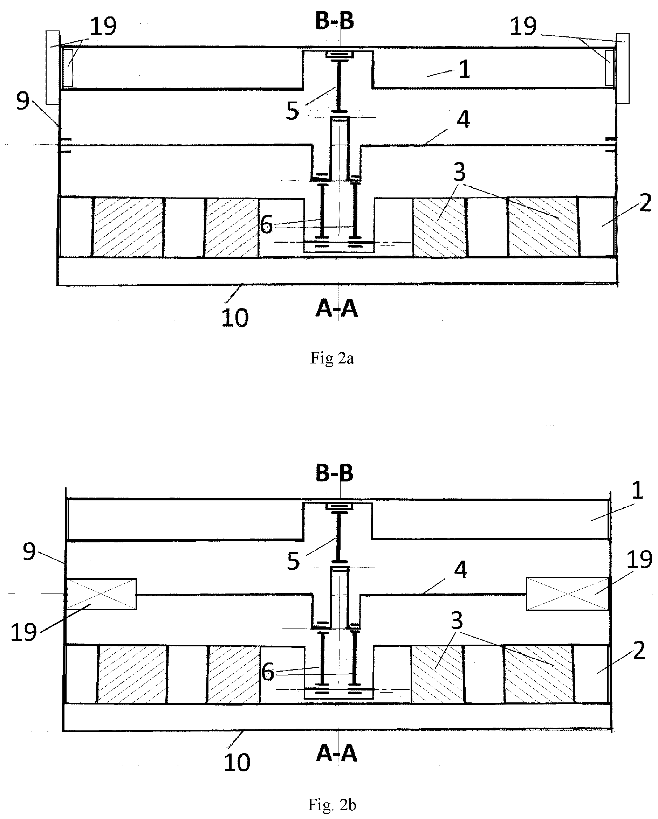

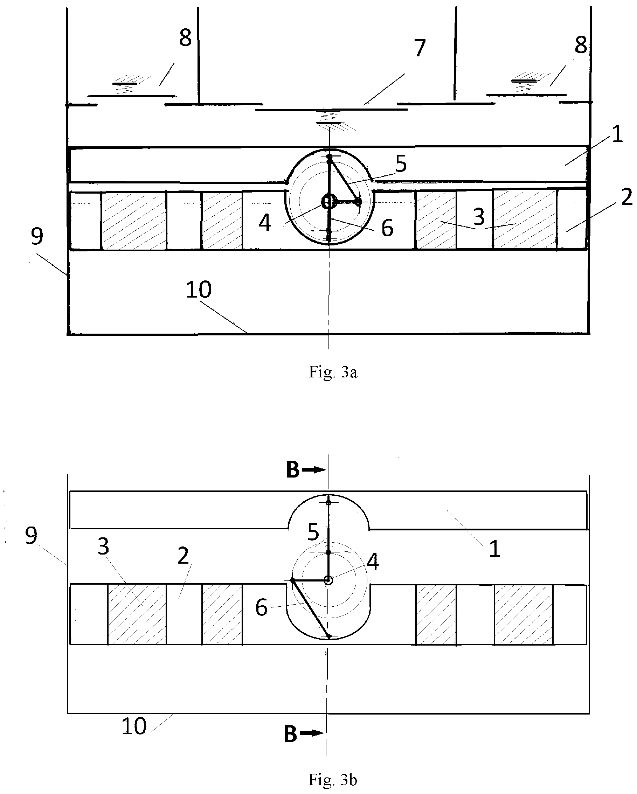

The crankshaft 4 is enclosed within the body 9 inside the engine's working space, where it is mounted. Between the working piston 1 and the displacer 2, a working space is formed in which the working gas is located, as shown in figs. 2a and 2b, and figs. 3a-d. The working gas may, for example, be helium, hydrogen, or carbon dioxide."

The crankshaft 4 controls and synchronizes the operation of the displacer 2 and the working piston 1. This construction allows the engine to have a cylindrical design, which in turn enables it to be easily placed in the rock mass. Additionally, this simplifies the engine's design and reduces the number of moving parts, as the only external moving part is the working piston 1. This reduces the engine's failure rate while maintaining its efficiency. Furthermore, this design eliminates the need for a displacer rod, which means no sealing is required, as it does not extend outside the engine and all elements are enclosed within the engine. In the engine's design with the crankshaft 4 mounted inside, special notches, or spaces, must be made in the displacer 2 and the working piston 1 to accommodate the connecting rod 5 of the working piston 1 and the connecting rod 6 of the displacer 2, as well as the crankshaft's journal to prevent collisions between these components.

The working piston 1, serving as the heat exchanger, absorbs heat from the working gas. The working piston 1 is made of a material with very high thermal conductivity and is exposed to the working gas on one side and the cooling medium on the other side, supplied through the space 16. In this example, the cooling medium is water, but it can also be another liquid with appropriate properties, such as liquefied natural gas (LNG), as described in more detail below.

In the case of a long rock mass and cylinder head heat exchanger 11 a part of it can initially be mounted in the borehole, and then the remaining part can be connected using a threaded connection together with the engine and the first section of the casing pipes 13 of the engine, along with the pre-insulated central pipe 15, which delivers the cooling medium from the surface. It is beneficial if the internal part of the rock mass - cylinder head heat exchanger 11 is filled with water to use the convective heat transport from the lower layers of the rock mass 18, which the rock mass - cylinder head heat exchanger 11 reaches, to improve heat exchange with the rock mass 18. The energy generation process by the engine can be carried out as described in the previous example.

The regenerator 3 consists of channels in the displacer 2, in which a heat-absorbing and heat-releasing filling is placed. The filling of the regenerator 3 is made from a material with a high heat capacity and good thermal conductivity. The filling preferably has a structure similar to wool and is made of copper or steel, which allows rapid heat transfer from the gas to the regenerator 3 and vice versa. The regenerator 3 directs the even flow of gas directly to the heat exchange surfaces, both on the heating side (i.e., the cylinder head 10) and on the cooling side (i.e., the working piston 1). This is achieved by strategically placing the wool-filled channels of the regenerator 3 so that a large number of small streams of working gas evenly reach both the cylinder head 10 and the working piston 1, effectively cooling and heating these components. This solution has a beneficial impact on the heat exchange in the engine.

The working piston 1 is connected to the generator-starting device 19. The generator-starting device 19 serves as a starting device for the Stirling engine and also functions as an electric generator. For the startup of the geothermal engine according to the invention, the generator-starting device 19 operates in the startup mode, powered externally by electrical energy, and converts it into mechanical energy to move the working piston 1. After the startup phase, the generator-starting device 19 stops receiving electrical power and switches to generator mode, where it converts the mechanical energy generated by the movement of the working piston 1 into electrical energy, which can then be transmitted to the surface via the cables 20 and delivered to the electrical grid

The generator-starting device 19 can be a linear device mounted on the working piston 1. In this variant, during the startup mode, electrical energy from the surface is supplied to the generator-starting device 19, which converts it into mechanical energy and initiates the movement of the working piston 1, causing the engine to start. After the engine starts, the generator-starting device 19 switches to generator mode, where the mechanical energy produced by the movement of the working piston 1 is converted into electrical energy by the generator-starting device 19 and transmitted via cables 20 to the surface. Alternatively, the generator-starting device 19 can be a rotating device mounted on the crankshaft 4. In this variant, during the startup mode, electrical energy from the surface is supplied to the generator-starting device 19, which converts it into mechanical energy, initiating the movement of the crankshaft, which in turn causes the movement of the working piston 1, thereby starting the engine. In generator mode, the mechanical energy from the rotation of the crankshaft 4 is converted into electrical energy. Placing the generator-starting device 19 in the engine's working space protects it from corrosion due to the cooling medium, e.g., water. The linear design is simpler and takes up less space in the engine's working space than the rotating design, and it is also more efficient."

The engine also includes a cooling medium circuit, described in detail below, which is used to supply the engine with cold cooling medium, absorb heat from the engine via the cold cooling medium, causing its heating, and discharging the heated cooling medium to the surface of the borehole. The heated cooling medium can serve as hot domestic water and can also provide thermal energy for above-ground central heating systems and domestic hot water systems.

The cooling medium circuit in the engine according to the invention includes a pump, detailed below, the casing pipe 13 placed along the walls of the borehole 17 and positioned axially in the central part of the borehole 17 inside the casing pipe 13, with the pre-insulated central pipe 15. The space between the central pipe 15 and the casing pipe 13 is adapted for the flow of heated cooling medium, while the interior of the central pipe 15 is adapted for the flow of cold cooling medium. The cold cooling medium constitutes the lower heat source and flows around the working piston 1. The pump consists of the working piston 1 and at least one suction valve 7 and at least one discharge valve 8, which are mounted on the upper part of the engine housing. The lower part of the central pipe 15 is positioned at such a distance from the upper surface of the working piston 1 as to allow free flow of the cooling medium into the flow space 14 of the heated cooling medium. The positioning of the casing pipe 13 along the walls of the rock mass enables additional heat absorption from the rock mass and further heating of the cooling medium.

The central pipe 15 insulation houses a control-power supply cable bundle 20 routed through a channel. These wires are used for starting the engine, receiving the electrical energy produced by it, as well as for monitoring operational parameters such as temperature, pressure, rotation, flow, valve position, etc., and for controlling the engine's operation. The engine parameters are measured using appropriately installed sensors and monitored via a control unit located on the surface. Control of rotation, temperature or pressure measurements are preferably carried out at several points, and data can be transmitted via a single common digital wire.

The solution according to the invention has a simple construction and a minimized number of moving parts, making it suitable for placement in boreholes. The engine according to the invention allows for the use of heat from the rock mass to generate energy and also enables the collection of thermal energy and its use for surface heating systems or central hot water systems, with minimal energy consumption and without the need to transport the cooling medium to the engine located on the surface. At the same time, the engine according to the invention is characterized by high efficiency, estimated at half the theoretical efficiency of the Carnot cycle for the given conditions.

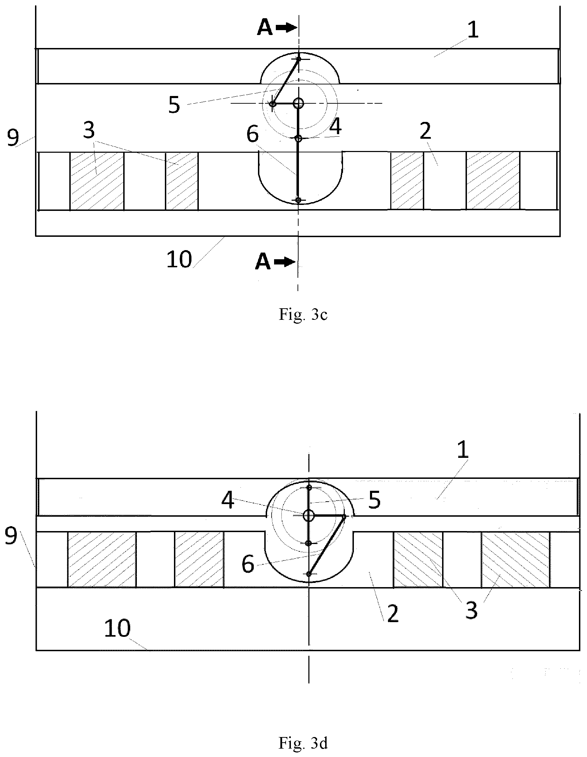

The embodiment of the invention also includes a method for obtaining energy from the rock mass using a geothermal engine, the individual stages of which are shown in Figures 3a-3d. The rock mass-cylinder head heat exchanger 11 receives heat from the rock mass 18 and then transfers this heat to the adjacent cylinder head 10. The heat from cylinder head 10 is then absorbed by the compressed cooled working gas in the engine's working space. This is phase I of the engine's operation, shown in Figure 3a, where the working gas is compressed between the cylinder head 10 and the displacer 2. The displacer 2 is in the upper return position, and the working piston 1, due to the increase in gas volume, moves upwards in the engine. In this phase, the pressure of the working gas is high, and its volume increases. As the temperature rises, the working gas increases in volume, forcing the working piston 1 to move to the upper position, where the engine enters phase II, as shown in Figure 3b. In phase II, the working piston 1 is in the upper return position, and the displacer 2 pumps the gas through the regenerator 3 into the cooled space between the working piston 1 and the displacer 2. In phase II, the working gas reaches its maximum volume. Then, the working piston 1 absorbs heat from the hot expanded working gas and transfers it to the cold cooling medium, causing the temperature of the working gas to decrease. As a result, its pressure drops, and the working gas decreases in volume, forcing the working piston 1 to move to the lower position, where the engine enters phase III, as shown in Figure 3 c. In phase III, the working piston 1 moves downward, the displacer 2 is in the lower return position, and the working gas continues to decrease in volume. The engine then enters phase IV, as shown in Figure 3d, where the working piston 1 is in the lower return position and will move upwards. The displacer 2 moves upwards, pumping the working gas through the regenerator 3 from the cooled space to the heated space between the head 10 and the displacer 2, and the gas reaches its minimum volume. The engine then sequentially goes through phases I, II, III, and IV again. The work of the working piston 1 during phases I-IV is converted into electrical energy by the generator-starting device 19 connected to the working piston 1. The generator-starting device 19 can be either linear or rotary. Additionally, as a result of the movement of the working piston 1, the suction valves 7 attached to the working piston 1 suck the cold cooling medium into the cooling medium circuit, and the working piston 1 pumps this cooling medium through the cooling system, i.e., the surface of the piston on the cooling medium side. The heated cooling medium, warmed by the heat from the rock mass, is then pumped to the surface, where its heat can be further used for heating purposes or for obtaining hot domestic water.

The presented method enables the direct generation of mechanical or electrical energy in the borehole, bypassing the need to transport the cooling medium to the engine located on the surface. The displacer movement of the working piston 1 increases the turbulence of the cooling medium on the pumping side of the working piston 1, which improves heat exchange and thus the efficiency and performance of the engine.

The operation of the working piston 1, through the action of the suction and discharge valves, causes the pumping of the cooling medium through the cooling system of the geothermal engine. Therefore, there is no need for external forced circulation of the working medium, which reduces energy conversion losses between the engine and the external circulating pump of the cooling medium.

In an advantageous embodiment, shown in the figures, the suction valve 7 is mounted axially in the borehole 17, while the discharge valves 8 are mounted on the circumference of the borehole 17. The cold cooling medium is drawn from the surface through pipe 15 via the cooling medium flow space 16 and the suction valve 7. The cooling medium then absorbs heat from the working piston 1, cooling the engine and gas in the working space. Afterward, the discharge valve 8, mounted on the circumference of the engine's pumping section, forces the cooling medium to the external annular part of the borehole, causing it to be pumped to the surface of the borehole 17. The arrangement of the suction and discharge valves in the cross-section of the engine is not, however, limited to the presented embodiment. The method of generating energy by the engine can be implemented in the same way as in the previous example.

Another embodiment of the geothermal engine differs from the previously described ones in that the geothermal engine is additionally connected to an LNG regasification station. In this case, the cooling medium is liquefied natural gas (LNG), supplied to the borehole for its regasification. The gas, cooling the engine as the lower heat source, absorbs heat from the rock mass 18. In this situation, due to the significant decrease in the temperature of the lower heat source caused by the very low temperature of LNG (i.e., below -162°C), and consequently a considerable increase in the temperature differential between the upper and lower heat sources for the engine, a significant increase in the efficiency and performance of the geothermal Stirling engine with an internal crankshaft is achieved. When using the engine in this way, it is important to ensure that the internal channel supplying LNG to the engine cooler has a much smaller cross-section area than the external channel, as regasification leads to a significant increase in the volume of the cooling medium, which is negligible in the case of a cooling medium where the phase remains unchanged after heat is absorbed, e.g., water, where both channels can have the same cross-section area. In this case, the method of generating energy by the geothermal engine differs from the previous examples in that the cooling medium is liquefied natural gas, which is pumped by the suction valves 7 and discharge valves 8, absorbs heat from the working piston 1, undergoes regasification, and is then discharged in a gaseous state through space 14 from the borehole to the surface.

The engine according to the invention can be placed either in existing boreholes or in a borehole drilled specifically for this purpose. The borehole 17 should be drilled to levels with rock mass 18 of high temperature, as this ensures efficient operation of the engine.

A parameter that positively influences engine performance is the temperature of the rock mass and the fluids it contains (water, petroleum, natural gas), as well as the thermal conductivity of the rock mass. The engine will have better efficiency in areas with a high geothermal gradient combined with the lowest possible cooling medium temperature, as reducing the borehole depth decreases investment costs. To achieve temperatures above 100°C, the borehole 17 under standard conditions should have a depth greater than 3000 meters below ground level, or the engine should be installed in zones of high thermal activity within the Earth's crust.

The rock mass 18 may be either dry i.e., non-water-bearing, or water-bearing. In the case of a dry rock mass, it is advantageous if it has a high thermal conductivity coefficient, as this ensures adequate heat flow to the rock mass-cylinder head heat exchanger 11 and subsequently to the engine, which is directly proportional to the engine's performance. On the other hand, high porosity and permeability of a water-bearing rock mass positively influence heat flow to the heat exchanger.

A socket is prepared at the bottom of the borehole 17 for mounting the engine. Below this socket, components that conduct heat to the heating exchanger engine of the from the part of the rock mass 18 located beneath the engine are installed. Then, the rock mass-cylinder head heat exchanger 11 is mounted in the prepared socket, transferring heat from the rock mass 18 to the engine cylinder head 10, heating the gas forced by the displacer 2 into the hot section of the engine's working space between the head 10 and the displacer 2. The rock mass-cylinder head heat exchanger 11 can be connected not only to the engine body 9 but also to the first section of the casing pipes 13. This arrangement ensures effective thermal conduction between these three components at the surface before lowering them into the borehole 17.

In the case of a long rock mass-cylinder head heat exchanger 11, part of it can be pre-installed in the borehole, and then the remaining part can be connected along with the engine and the first section of casing pipes 13 using a threaded connection. This section also includes the pre-insulated central pipe 15, which supplies cooling medium from the surface. As the engine is lowered into the borehole with subsequent sections of the central pipe 15, the control and power cable bundle 20 on the exterior of the central pipe insulation 15 should be enclosed in a special channel or attached with special clips. It is advantageous if the inner part of the rock mass-cylinder head heat exchanger 11 is filled with water to utilize convective heat transport from the lower rock mass layers 18 reached by the heat exchanger 11, enhancing heat transfer with the rock mass 18. The method of energy generation by the engine can be carried out in the same manner as in the previous example.

The central pipe 15 should be mounted in such a way so that it is located axially in the middle of the borehole 17. At the surface, appropriate hydraulic connections are made to the wellhead, in such a way as to ensure the supply of cold cooling medium to the space 16 inside the central pipe 15 and receipt of heated cooling medium from the space 14 and transfer to the surface installation.

Then the electrical connection of the engine integrated with the pump that forces the circuit flow of the cooling medium and the installation of the control system is made.

Then the hydraulic system is connected to the surface heat exchangers of the surface heating circuits (i.e., central heating or central domestic hot water network) or to the cooling medium radiator, supplying the cooling medium to the borehole with the central pipe 15. For LNG regasification installation, a connection should be made to supply LNG to the space 16 of the central pipe 15 and receiving gas from the space 14 of casing pipe 13. After ensuring that all elements of the installation are connected properly, the pumping of the engine is initiated with the integrated pump, specifically in form of suction valves 7 and discharge valves 8 located at the top part of the engine body, forcing cooling medium circuit flow, due to that the cold cooling medium is pumped out to the borehole via the central pipe 15, the working piston 1 working as the engine cooler, producing temperature difference between upper and lower heat source of the engine which in turn forces the generating work of the engine.

### Drawings indicators

- 1: working piston
- 2: displacer
- 3: regenerator
- 4: crankshaft
- 5: connecting rod of working piston 1
- 6: connecting rod of displacer 2
- 7: suction valve
- 8: discharge velve
- 9: engine body
- 10: cylinder head
- 11: rock mass-cylinder head heat exchanger
- 12: engine thermal isolation
- 13: casing pipe
- 14: heated cooling medium flow space
- 15: central pipe
- 16: cold cooling medium flow space
- 17: borehole
- 18: rock mass
- 19: generator-starting device
- 20: control-power supply cable bundle

## Claims

1. Geothermal engine with at least one heat receiving element that absorbs heat from an upper heat source and with at least one heat discharging element that discharges heat to the lower heat source, suitable to be placed in a borehole (17) and having a cooling medium circuit,
wherein the geothermal engine has a cylindrical engine body (9) with a cylinder head (10), in which a working piston (1), a displacer (2) equipped with a regenerator (3) are placed movably within the engine body (9) along its axis, additionally, a crankshaft (4), a working piston (1) connecting rod (5), and a displacer (2) connecting rod (6), a rock mass - cylinder head heat exchanger (11), as well as a generator-starting device (19) for converting an electrical energy into a mechanical energy for starting the engine and for converting a mechanical energy produced by the engine into an electrical energy,
wherein the cooling medium circuit comprises a pump that is integrated with the engine, a casing pipe (13) located along walls of the borehole (17) and a pre-insolated central pipe (15) placed axially in a central part of the borehole (17), wherein inside the casing pipe (13) between the central pipe (15) and the casing pipe (13) there is a heated cooling medium flow space (14), while a cool cooling medium flow space is located inside central pipe (15) wherein the cold cooling medium constitutes the lower heat source and flows around a top surface of the working piston (1),
**characterized in that**
said at least one heat discharging element that discharges heat to the lower heat source is the working piston (1), and said at least one heat absorbing element that absorbs heat from the upper heat source is the rock mass - cylinder head heat exchanger (11)
the rock mass - cylinder head heat exchanger (11) is mounted with its bottom part in the receptacle at the bottom of the of the borehole (17), while its upper part is in contact with the engine body (9), particularly with the cylinder head (10) of the engine,
the generator-starting device (19) and crankshaft (4) are placed inside the working space of the engine inside which space there is working gas, between the working piston (1) and the displacer (2),
the regenerator (3) is constructed as channels distributed in the displacer (2) having a filler that absorbs and discharges heat, and
the pomp comprises the working piston (1) and located at the top part of the engine body at least one suction valve (7) and at least one discharge valve (8).

2. Engine according to one of the claim 1, **characterized in that** the generator-starting device (19) is device that has a linear construction mounted on the working piston (1).

3. Engine according to one of the claim 1, **characterized in that** the generator-starting device (19) is a device has a rotary construction mounted on the crankshaft (4).

4. Engine according to one of the claim 1, **characterized in that** said at least one suction valve (7) is axially mounted in the borehole (17) and/or at least one discharge valve (8) is mounted at the circumference of the borehole (17).

5. Engine according to one of the claims 1-4, **characterized in that** the working gas is either one out of helium, hydrogen or carbon dioxide.

6. Engine according to one of the claims 1-5, **characterized in that** the cooling medium is water.

7. Engine according to one of the claims 1 - 5, **characterized in that** the engine is connected with a LNG regasification station, and the cooling medium is a Liquid Natural Gas LNG

8. Method of extracting energy form a rock mass (18) using a geothermal engine according to one of the claims 1 to 7 mounted in a borehole (17) **characterized in that** the movement of a working piston (1) is initiated and the flow and change in volume of a working gas located inside of the engine is forced providing mechanical energy needed to start the engine with the use of an external generator-starting device (19), powered from the surface and working in starting mode
then the generator-starting device (19) is switched to generating mode,
then the compressed working gas is heated with heat obtained from the borehole (17) through a borehole-head heat exchanger (11) and an engine body (9) head (10), moving the working piston (1) upward the engine until reaching an upper return position at which the working gas volume in the internal space of the engine has maximum volume,
then absorbs heat from the expanded working gas with the working piston (1) and transfers said heat to cool cooling medium, decreasing said gas volume and forcing a downward movement of the working piston to reach lower return position, at which the working gas volume within internal engine space reaches minimum value,
then each step of the method is sequentially repeated, converting the mechanical energy of the working piston movement with use of the generating-starting device (19) that is set to generating mode in the electrical energy, that is extracted with wires on the surface,
and pumping heated cooling medium with use of at least one discharge valve (8) through the cooling medium circuit.

9. Method according to claim 8, **characterized in that** the working gas used is helium, hydrogen or carbon dioxide.

10. Method according to claim 8, **characterized in that** water is used as the cooling medium, which after receiving heat is transported to the surface and used as, in example, a heating and warm water source.

11. Method according to claim 8, **characterized in that** a Liquid Natura Gas is used as the cooling medium which is sucked in with said at least one suction valve (7) and said at least one discharge valve (8), receiving heat from the working piston (1), is submitted to a regasification process and then in a gas state pumped through the space (14) out of the borehole (17) to the surface.
